# DEMANDE DE BREVET EUROPEEN

(11) **EP 4 144 630 A1**
(43) Date de publication de la demande: **08.03.2023**
(21) Numéro de dépôt: 22192873.2
(22) Date de dépôt: 30.08.2022
(51) Int. Cl.: B63B 49/00, B63B 79/40, B63H 21/21, B63H 21/20

(54) **SYSTÈME DE GESTION ÉNERGÉTIQUE D'UN BATEAU FLUVIAL OU MARITIME**

(30) Priorité: 01.09.2021 FR 2109123
(71) Demandeur: E-Nautic, 33120 Arcachon (FR)
(72) Inventeur: FROUIN, Hervé, 33120 ARCACHON (FR)
(74) Mandataire: Aquinov

(57) **Abrégé**

L'invention porte sur un système de gestion énergétique (1) d'un bateau (B) fluvial ou maritime, comportant une unité de stockage et d'alimentation d'énergie électrique et une unité de production d'énergie embarquée comportant une unité de contrôle (10) comportant une mémoire (10.1) dans laquelle est stocké au moins un trajet (T) prédéterminé destiné à être effectué par le bateau (B) et définissant au moins une escale (10.10, 10.12) associée à un horaire ; une unité de calcul (11) agencée pour déterminer, à partir dudit trajet (T) prédéterminé, un cap cible et une vitesse cible pour atteindre ladite escale (10.10, 10.12) audit horaire associé, et pour déterminer, au moins à partir dudit cap cible et de ladite vitesse cible, une source d'énergie du mode de propulsion (11.1, 11.2) cible parmi l'unité de stockage et d'alimentation et l'unité de production d'énergie embarquée.

## Description

Domaine technique.

L'invention a pour objet un système de gestion énergétique d'un bateau fluvial ou maritime.

L'invention se rapporte au domaine technique des systèmes de gestion énergétique des véhicules, et plus particulièrement les systèmes de gestion énergétiques de bateaux hybrides, tels que les bateaux fluviaux et maritimes.

### Etat de la technique.

L'évolution des mentalités notamment liées à l'écologie et au respect de notre planète nous conduit à remettre en avant des transports de type bateaux fluviaux ou maritimes. Les bateaux fluviaux sont utilisés sur les voies navigables comme les fleuves, les rivières et les canaux pour le transport de marchandises ou pour le transport de personnes entre des points distincts de cette voie navigable. Les bateaux maritimes sont utilisés en mer pour le transport de personnes ou de marchandises entre destinations côtières. Pour répondre aux questions d'écologie et d'économie d'énergie, ces bateaux peuvent se voir équipés de systèmes propulsifs alimentés par diverses sources d'énergie, dont par exemple des batteries, et disposer par exemple d'un ou plusieurs modes de production d'énergie embarqués.

Il est connu d'utiliser prioritairement le mode de propulsion électrique sur batteries puis, lorsque celles-ci sont vides d'utiliser le mode de production qui peut alors fournir l'énergie de propulsion et/ou recharger les batteries. Or, du fait de l'autonomie limitée des batteries alimentant le moteur, de leur poids et de leur coût, il n'est pas toujours possible d'employer le mode de propulsion électrique sur batteries sur une durée suffisamment longue, de sorte que le mode de production embarqué est souvent utilisé, ce qui n'est souvent pas favorable économiquement et/ou pour l'environnement.

Des systèmes existent pour permettre d'optimiser l'utilisation des batteries de manière plus durable en alternant l'utilisation du mode de production électrique et l'utilisation sur batterie. Toutefois ces systèmes sont adaptés à des gros navires et à de longs trajets, notamment de plusieurs jours entre deux pays. L'optimisation du mode de propulsion tient compte de la vitesse du navire mais ne tient pas compte des contraintes d'horaires d'un bateau maritime ou fluvial ayant sur son trajet une pluralité de points d'arrêts sur des distances de l'ordre du kilomètre. Ce type de système d'optimisation est difficilement adaptable à de courts trajets rythmés par des contraintes.

Un objectif de l'invention est de proposer un système d'optimisation du choix de la source d'énergie alimentant le système propulsif du bateau afin de maximiser le mode de propulsion électrique sur batteries tout en proposant une durabilité plus grande des batteries et une diminution de leur dimensionnement.

### Présentation de l'invention.

L'invention a pour objet un système de gestion énergétique d'un bateau fluvial ou maritime comportant un système propulsif, une unité de stockage et d'alimentation d'énergie électrique du système propulsif dudit bateau et une unité de production d'énergie embarquée adaptée pour sélectivement recharger ladite unité de stockage et d'alimentation et/ou pour alimenter le système propulsif, ledit système de gestion énergétique, comportant une unité de contrôle comportant une mémoire dans laquelle est stocké au moins un trajet prédéterminé destiné à être effectué par le bateau et définissant au moins une escale associée à un horaire ; une unité de calcul agencée pour déterminer, à partir dudit trajet prédéterminé , un cap cible et une vitesse cible pour atteindre ladite escale audit horaire associé, et pour déterminer, au moins à partir dudit cap cible et de ladite vitesse cible, une source d'énergie cible du système propulsif parmi l'unité de stockage et d'alimentation et l'unité de production d'énergie embarquée

Le bateau fluvial ou maritime est dit hybride, c'est-à-dire qu'il peut comporter une source d'énergie électrique alimentée par l'unité de stockage et d'alimentation d'énergie électrique et une source de production d'énergie embarquée. L'unité de stockage et d'alimentation d'énergie électrique du système propulsif et l'unité de production d'énergie embarquée adaptée pour sélectivement recharger ladite unité de stockage et d'alimentation et/ou pour alimenter le système propulsif peuvent former une source d'énergie du bateau.

Dans un mode de réalisation, l'unité de stockage et d'alimentation d'énergie électrique du système propulsif peut comporter une pluralité de batteries. Dans un autre mode de réalisation, l'unité de stockage et d'alimentation d'énergie électrique du système propulsif peut comporter une seule batterie.

L'unité de stockage et d'alimentation d'énergie électrique peut se recharger par dérivation de puissance du mode de production embarqué, lors de son utilisation et peut éventuellement se recharger par récupération d'énergie cinétique du moteur électrique lors de l'utilisation de la source de production d'énergie embarquée.

L'unité de contrôle du système comporte une mémoire dans laquelle sont stockées une pluralité d'informations de navigation. La mémoire de l'unité de contrôle peut contenir un trajet prédéterminé unique comportant au moins un point de départ et un point d'arrivée. La mémoire de l'unité de contrôle peut contenir une pluralité de trajets prédéterminés. Les trajets prédéterminés peuvent par exemple être plusieurs alternatives à un même trajet ou plusieurs trajets différents et pouvant comporter des points de départ et/ou des points d'arrivée distincts. Chacun des points de départ et points d'arrivée sont associés à un horaire. La mémoire de l'unité de contrôle peut comporter les cartes des courants ainsi que les horaires des marées.

Le système de gestion comporte une unité de calcul pouvant permettre au système, à partir d'au moins une donnée d'entrée stockée dans la mémoire, de calculer une pluralité de données de sortie pouvant permettre de décider quelle source d'énergie du système propulsif semble la plus optimale. L'unité de calcul peut permettre de calculer la pluralité de paramètres de sortie à partir de données d'entrée calculées précédemment, c'est-à-dire qu'une donnée de sortie calculée par l'unité de calcul peut servir de base à un futur calcul.

A partir des données de trajets prédéterminés et d'horaires prédéterminés stockés dans la mémoire de l'unité de contrôle, l'unité de calcul peut alors calculer un cap cible à suivre et une vitesse cible à atteindre, ledit cap cible et ladite vitesse cible pouvant permettre d'atteindre l'escale ou le point d'arrivée du trajet à l'horaire associé.

A partir des données de cap cible et de vitesse cible calculés, l'unité de calcul peut calculer la source d'énergie optimale à utiliser.

Le système de gestion énergétique peut comporter une unité de visualisation comprise dans un terminal du bateau. L'unité de visualisation peut se présenter sous la forme d'un écran. L'unité de visualisation peut permettre à un navigateur de connaitre le cap cible, la vitesse cible et le type de propulsion optimal qui ont pu être calculés par l'unité de calcul. Le navigateur peut choisir de suivre les informations affichées sur l'unité de visualisation correspondant aux paramètres calculés par l'unité de calcul. Le navigateur peut ignorer de suivre les informations affichées sur l'unité de visualisation correspondant aux paramètres calculés par l'unité de calcul.

Avantageusement, le trajet définit une pluralité d'escales chacune associée à un horaire, dans lequel l'unité de contrôle comporte un système de géolocalisation du bateau, et dans lequel l'unité de calcul est agencée pour déterminer, lors de chaque escale dudit trajet, à partir dudit trajet et de la position du bateau, estimée au moyen du système de géolocalisation, un cap cible et une vitesse cible pour atteindre la prochaine escale audit horaire associé, et pour déterminer, au moins à partir dudit cap cible et de ladite vitesse cible, une source d'énergie cible.

Le terminus de l'aller et le terminus du retour peuvent être une escale. Le terminus d'un trajet pouvant être la dernière escale sur un aller ou un retour dudit trajet. Le trajet compris entre deux escales peut former une portion de trajet. Chaque trajet prédéterminé peut comporter entre son point de départ et son point d'arrivée une ou plusieurs escales. Chacun des points de départ, points d'arrivée et points d'escale sont associés à un horaire enregistré dans la mémoire de l'unité de contrôle. L'unité de visualisation peut afficher sur le terminal du bateau, avant le départ, le trajet complet comportant le point d'arrivée et/ou les escales. Dans un autre mode de réalisation, l'unité de visualisation peut afficher sur le terminal du bateau, à chaque escale, la portion de trajet à effectuer. L'unité de visualisation du terminal peut donc être mise à jour à chaque escale.

Le système de géolocalisation peut permettre de connaitre la position du bateau sur le trajet prédéterminé.

Avantageusement, l'unité de contrôle est agencée pour déterminer un état de charge de l'unité de production électrique du bateau, et l'unité de calcul est agencée pour déterminer ladite source d'énergie cible du système propulsif au moins à partir dudit cap cible, de ladite vitesse cible et dudit état de charge.

L'unité de contrôle peut disposer de l'état de charge de la batterie, c'est-à-dire si la batterie est pleine, si la batterie est vide ou si la batterie est dans un état de charge intermédiaire. Lorsque la batterie est dans un état de charge intermédiaire, l'unité de contrôle peut disposer du pourcentage de charge restant dans la batterie du bateau. L'état de charge intermédiaire peut comporter une pluralité de seuils, par exemple un premier seuil à 80% de charge, notamment 60% de charge et un deuxième seuil à 20% de charge, notamment à 40% de charge.

L'unité de calcul peut permettre de déterminer si l'état de charge de la batterie permet d'accomplir la portion de trajet jusqu'à la prochaine escale en tenant compte du cap à suivre et de la vitesse nécessaire pour y parvenir à l'horaire prédéterminé.

En fonction de l'état de charge de la batterie, l'unité de calcul peut déterminer quelle source d'énergie de propulsion est à privilégier pour atteindre la prochaine escale.

Avantageusement, l'unité de contrôle est apte à communiquer avec au moins une base de données distante pour recevoir des données relatives aux conditions de navigation sur ledit trajet jusqu'à ladite escale et l'unité de calcul est agencée pour déterminer ladite source d'énergie cible au moins à partir dudit cap cible, de ladite vitesse cible, dudit état de charge et desdites conditions de navigation.

La base de données distante peut comporter les conditions de navigation, par exemple les courants, les marées, les données météorologiques, la température. Les conditions de navigation peuvent être consultées par l'unité de calcul en temps réel à chaque escale ou peut vent être prédéterminées lors du point de départ, avant d'entamer le premier trajet. Les conditions de navigation peuvent avoir une influence sur le calcul du cap cible et de la vitesse cible.

L'unité de contrôle est notamment agencée pour déterminer une valeur relative auxdites conditions de navigation, par exemple sur une échelle de 1 à 5, 1 indiquant des conditions très défavorables (par ex. navigation à contre-courant avec condition météorologique défavorable) et 5 indiquant des conditions très favorables (par ex. navigation dans le sens du courant, avec condition météorologique favorable). En fonction de la valeur relative attribuée aux conditions de navigation, l'unité de contrôle peut déterminer le cap cible et la vitesse cible, puis la source d'énergie optimale à utiliser. Ainsi, la valeur relative attribuée aux conditions de navigation peut influer sur le choix de la source d'énergie optimale à utiliser.

Si l'état de charge de la batterie empêche d'atteindre l'escale en respectant des critères définis, l'unité de contrôle peut préconiser sur l'unité de visualisation du terminal, l'utilisation de l'unité de production d'énergie embarquée. Si l'état de charge de la batterie est supérieur au premier seuil d'état de charge de la batterie, l'unité de contrôle peut préconiser sur l'unité de visualisation du terminal, l'utilisation de l'unité de stockage et d'alimentation d'énergie électrique. Si l'état de charge de la batterie est compris entre le premier seuil et le deuxième seuil d'état de charge de la batterie, l'unité de contrôle peut suggérer l'utilisation du mode de propulsion électrique sur batteries. Si l'état de charge de la batterie est inférieur au deuxième seuil d'état de charge de la batterie, l'unité de contrôle peut préconiser sur l'unité de visualisation du terminal, l'utilisation de l'unité de production électrique embarquée.

Si l'état de charge de la batterie est compris entre le premier seuil d'état de charge de la batterie et le deuxième seuil d'état de charge de la batterie, l'unité de contrôle peut préconiser, si les conditions de navigation ont une valeur relative supérieure ou égale à 3, l'utilisation de l'unité de stockage et d'alimentation d'énergie électrique, et si les conditions de navigation ont une valeur relative inférieure à 3, l'utilisation l'unité de production d'énergie embarquée.

Avantageusement, l'unité de contrôle est agencée pour comptabiliser la durée d'utilisation de la source d'énergie cible et l'unité de calcul est agencée pour déterminer ladite source d'énergie optimale cible au moins à partir dudit cap cible, de ladite vitesse cible, dudit état de charge et de ladite durée d'utilisation.

La durée d'utilisation de la batterie peut comporter un seuil de durée d'utilisation minimal de 45 minutes, notamment 30 minutes. L'unité de calcul peut tenir compte de la durée d'utilisation minimale de la batterie en plus du cap cible et de la vitesse cible pour influencer le calcul de la source d'énergie.

Avantageusement, l'unité de contrôle est agencée pour déterminer une température de fonctionnement de ladite batterie et l'unité de calcul est agencée pour déterminer ladite source d'énergie cible au moins à partir dudit cap cible, de ladite vitesse cible, dudit état de charge et de ladite température de fonctionnement.

La température de fonctionnement optimal de la batterie peut être compris entre un premier seuil de 15 degrés, notamment de 18 degrés et un deuxième seuil de 30 degrés, notamment de 35 degrés. L'unité de calcul peut tenir compte de la température de fonctionnement optimal de la batterie en plus du cap cible et de la vitesse cible pour influencer le calcul du mode de propulsion. Si la température de la batterie est trop basse, c'est à dire inférieure au premier seuil de température, l'unité de contrôle peut préconiser l'utilisation de l'unité de production d'énergie embarquée.

Avantageusement, l'unité de contrôle est agencée pour comptabiliser le nombre de changements de source d'énergie opérés depuis le début d'une période de fonctionnement donnée dudit bateau et l'unité de calcul est agencée pour déterminer ledit mode de propulsion cible au moins à partir dudit cap cible, de ladite vitesse cible, dudit état de charge et du nombre de changements.

Si le nombre de changements de mode de propulsion est supérieur à un seuil donné et que les autres conditions le permettent, l'unité de contrôle peut préconiser de conserver la même source d'énergie. Avantageusement, l'unité de calcul et/ou l'unité de contrôle peut effectuer une planification des changements de source d'énergie sur une période entière, par exemple une journée. Par exemple, si le nombre de changements de mode de propulsion est supérieur à un seuil donné et que l'état de charge de la batterie peut empêcher de finir le trajet, l'unité de contrôle peut préconiser l'utilisation de l'unité de production embarquée, jusqu'à la prochaine escale lors de laquelle l'état de charge de la batterie peut permettre de finir le trajet.

Avantageusement, le système de gestion énergétique comporte une unité de visualisation agencée pour afficher sur un terminal dudit bateau, ladite source d'énergie cible.

Le cas échéant, l'unité de visualisation peut indiquer à un utilisateur du bateau, notamment son pilote, la source d'énergie optimale, calculée par l'unité de calcul, pour la suite de son trajet. En variante, une unité de contrôle peut automatiquement sélectionner la source d'énergie optimale pour alimenter le système propulsif pour la suite du trajet.

Avantageusement, l'unité de contrôle est agencée pour recevoir ou estimer en temps réel des données, dites temps réel, relatives aux conditions de navigation et/ou de fonctionnement du bateau et pour comparer lesdites données temps réel avec des données initiales et prédéterminées associées aux trajets prédéterminés stockés dans la mémoire de l'unité de contrôle. Le cas échéant, l'unité de calcul étant une première unité de calcul, le système de gestion énergétique comporte une deuxième unité de calcul agencée pour, lorsque l'unité de contrôle détermine que les données temps réel diffèrent des données initiales, prédire une source d'énergie cible du système propulsif à partir des données temps réel, et, lorsque l'unité de contrôle détermine que les données temps réel diffèrent des données initiales, l'unité de visualisation affiche ladite source d'énergie cible prédit par la deuxième unité de calcul.

Selon l'invention, les données initiales sont des hypothèses ayant permis de définir les trajets du bateau, et sur lesquels la première unité de calcul se base pour déterminer la source d'énergie optimale. Or, ces hypothèses sont susceptibles de varier, de façon ponctuelle ou de façon récurrente, voire de façon définitive, de sorte que la source d'énergie, bien qu'optimale selon les hypothèses initiales, ne le soit plus compte tenu de ces variations. En d'autres termes, selon cette caractéristique, lorsqu'il est constaté une dérive entre les données réelles et les hypothèses ayant permis à la première unité de calcul de déterminer la source d'énergie, une deuxième unité de calcul pallie cette dérive en prenant le relai de la première unité de calcul pour prédire la source d'énergie cible à partir de ces données réelles.

On entend notamment par données réelles l'une ou plusieurs des données suivantes, obtenues en temps réel, par un ou plusieurs capteurs du système embarqués dans la navette ou par un ou plusieurs capteurs distants de la navette et transmis au système de gestion énergétique: état de charge ou état de santé d'une batterie d'une unité de stockage et d'alimentation d'énergie cinétique électrique du bateau, intensité d'un courant électrique et/ou tension fourni(e) par une unité de stockage et d'alimentation d'énergie cinétique électrique du bateau, température d'une batterie d'une unité de stockage et d'alimentation d'énergie cinétique électrique du bateau, vitesse ou débit d'un courant d'un canal ou d'un cours d'eau sur lequel circule le bateau, au niveau du bateau ou en un ou plusieurs points en amont ou en aval du bateau, changement d'un horaire du trajet du bateau, encombrement et/ou trafic et/ou présence d'un obstacle sur un canal ou d'un cours d'eau sur lequel circule le bateau, indicateur de performance du bateau.

De préférence, la deuxième unité de calcul est agencée pour mettre en œuvre au moins un algorithme d'apprentissage automatique apte à prédire ladite source d'énergie cible à partir desdites données temps réel, ledit algorithme ayant été entrainé au préalable à prédire une source d'énergie cible à partir des sources d'énergie déterminées par la première unité de calcul lorsque lesdites données temps réel sont conformes auxdites données initiales. En d'autres termes, on procède à un en-trainement supervisé de la deuxième unité de calcul avec toute nouvelle donnée réelle acquise lorsque le bateau est opérationnel et sans que l'on constate de dérive vis-à-vis des données initiales, cette nouvelle donnée réelle étant alors étiquetée avec la source d'énergie cible déterminée par la première unité de calcul.

La deuxième unité de calcul peut être un classifieur. Les techniques de classification fonctionnent en représentant les objets par un ensemble de caractéristiques, dites variables explicatives. Il est ainsi possible de définir un ou plusieurs espaces de caractéristiques dans lesquels les caractéristiques des objets se projettent en formant des « nuages de points » représentant des classes d'objets. Il est alors possible de définir des frontières entre ces nuages, de sorte qu'il soit possible d'attribuer une classe à tout nouvel objet en fonction de la projection de ses variables explicatives dans ce ou ces espaces vis-à-vis de ces frontières. Ces frontières sont apprises, de façon automatique, en se basant sur un ensemble d'objets de référence aussi appelé ensemble d'apprentissage, la classe de chaque objet étant connue au préalable. Les règles permettant de décider de l'appartenance ou non d'un objet à une classe, sont ainsi issues de l'apprentissage.

On appelle ainsi classifieur, un programme informatique dont le rôle est de décider à quelle classe appartient un nouvel objet fourni en entrée, en fonction des informations apprises. La classe d'appartenance est déterminée par application des règles de décision (autrement appelées base de connaissances) qui ont elles-mêmes été préalablement apprises sur les données d'apprentissage.

La deuxième unité de calcul peut ainsi être entrainée, à partir d'un jeu de différentes données relatives aux conditions de navigation et/ou de fonctionnement du bateau, à classer ce jeu de données dans une classe associée à une source d'énergie ou dans une autre classe associée à une autre source d'énergie.

Dans un exemple de réalisation, la deuxième unité de calcul pour être un réseau de neurones. L'expression "réseau de neurones" désigne une structure complexe formée par une pluralité de couches, chaque couche contenant une pluralité de neurones artificiels. Un neurone artificiel est un module de traitement élémentaire, qui calcule une sortie unique sur la base des informations qu'il reçoit du ou des neurones précédents. Chaque neurone d'une couche est relié à au moins un neurone d'une couche suivante par une synapse artificielle à laquelle est affecté un coefficient ou poids synaptique dont la valeur est ajustée lors l'apprentissage. C'est au cours de cet apprentissage que le poids de chaque synapse artificielle sera déterminé à partir des données réelles étiquetées avec le mode de propulsion cible déterminé par la première unité de calcul.

L'invention se rapporte également à un bateau fluvial ou maritime comportant le système de gestion énergétique, le système propulsif, l'unité de stockage et d'alimentation en énergie électrique dudit système propulsif et l'unité de production d'énergie embarquée adaptée pour sélectivement recharger ladite unité de stockage et d'alimentation et/ou pour alimenter le système propulsif.

Avantageusement, l'unité de production d'énergie embarquée est une unité de production d'énergie électrique.

L'unité de production d'énergie peut, par exemple être un groupe électrogène, ou une pile à combustible.

Dans ce mode de réalisation, les batteries peuvent se recharger par dérivation de puissance de l'unité de production d'énergie électrique, lors de son utilisation et peuvent éventuellement se recharger par récupération d'énergie cinétique du moteur électrique lors des décélérations.

Avantageusement, l'unité de production d'énergie embarquée est une unité de production d'énergie thermique.

L'unité de production d'énergie thermique peut, par exemple être un moteur thermique, notamment un moteur employant un carburant.

Dans ce mode de réalisation, les batteries peuvent se recharger par transformation d'énergie mécanique du moteur thermique, via un générateur, lors de l'utilisation de l'unité de production d'énergie thermique.

### Brève description des figures.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig.1] représente schématiquement un mode de réalisation d'un trajet prédéterminé effectué par une navette fluviale ou maritime.
[Fig.2] représente schématiquement un mode de réalisation du fonctionnement de l'unité de calcul déterminant la source d'énergie cible à afficher sur le terminal de la navette.
[Fig.3] représente schématiquement un mode de réalisation d'un système de gestion d'énergie.

Dans la description qui suit, les éléments identiques, par structure ou par fonction, apparaissant sur différentes figures conservent, sauf précision contraire, les mêmes références.

### Description des modes de réalisation.

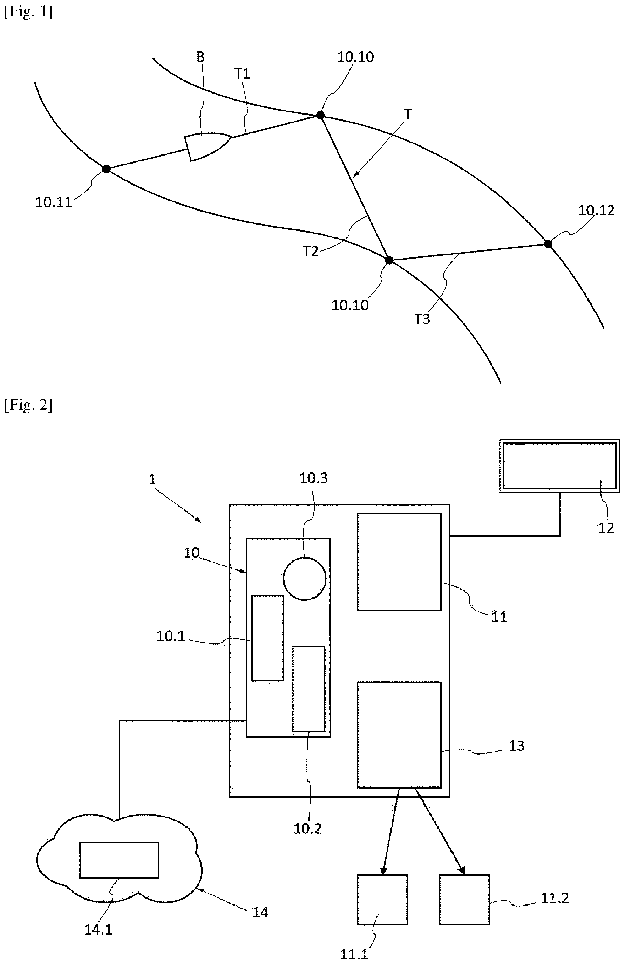

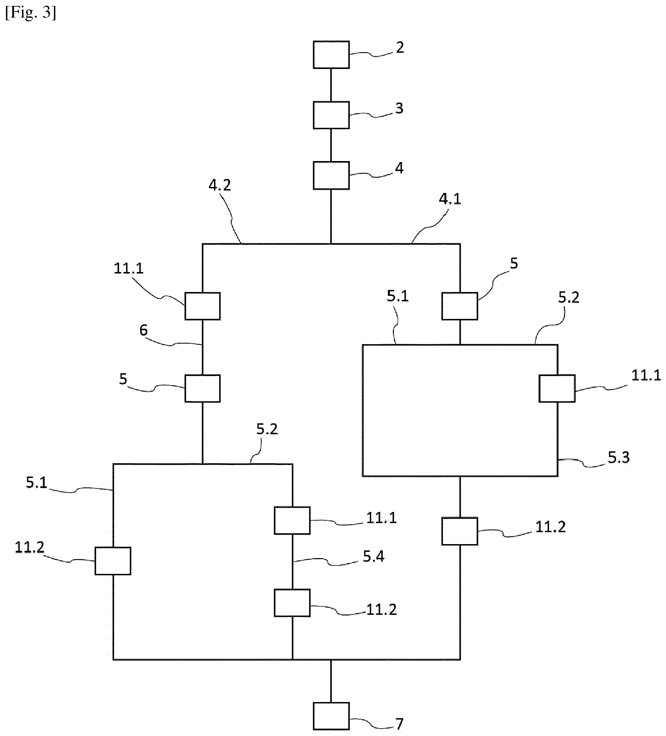

On a représenté en [Fig.1] un mode de réalisation d'un trajet T prédéterminé effectué par un bateau B fluvial ou maritime utilisant un système de gestion énergétique 1 décrit en [Fig.3]. Le fonctionnement du système de gestion énergétique 1 est décrit en lien avec la [Fig.2].

Le système de gestion d'énergie 1 décrit en [Fig.3] comporte une unité de contrôle 10, une première unité de calcul 11 et une unité de visualisation 12. Le bateau B comportant le système de gestion d'énergie 1 est hybride, c'est-à-dire qu'il comporte à la fois une unité de stockage et d'alimentation d'énergie électrique 11.1 comportant dans ce mode de réalisation, une batterie rechargeable par un dispositif de recharge et unité de production d'énergie embarquée adaptée pour recharger ladite unité de stockage et d'alimentation et/ou pour alimenter le système propulsif 11.2.

L'unité de contrôle 10 comporte une mémoire 10.1 dans laquelle sont stockées une pluralité de données. La mémoire 10.1 comporte une pluralité de trajets T prédéterminés correspondant aux divers trajets T que le bateau B effectue, le trajet T étant associé à une pluralité d'escales 10.10, chacune étant associée à un horaire prédéterminé. La mémoire 10.1 comporte une carte des courants fluviaux ou maritimes.

L'unité de contrôle 10 comporte un système de géolocalisation 10.3 permettant de connaitre la position du bateau B à chaque instant par rapport au trajet T prédéterminé stocké dans la mémoire 10.1. L'unité de contrôle 10 détermine un état de charge 10.2 de la batterie de l'unité de stockage et d'alimentation d'énergie électrique 11.1. L'unité de contrôle 10 communique avec une base de données 14 distante et reçoit en temps réel de ladite base de données 14, des données relatives aux conditions de navigation 14.1 sur le trajet jusqu'à la prochaine escale 10.1.

L'unité de calcul 11 peut déterminer le cap et la vitesse à suivre à partir du trajet T prédéterminé stocké dans la mémoire 10.1. Puis, l'unité de calcul 11 peut déterminer la source d'énergie 11.1, 11.2 la plus optimale à partir des données de cap et de vitesse calculées en amont.

L'unité de visualisation 12 affiche sur le terminal du bateau B, le cap et/ou la vitesse et/ou la source d'énergie 11.1, 11.2 optimale en fonction des calculs réalisés par l'unité de calcul 11.

Le bateau B est prévu pour suivre un trajet T prédéterminé tel que représenté en [Fig.1]. Le trajet T comporte un point de départ 10.11, un point d'arrivée 10.12 et deux escales 10.10. Chacun des points de départ 10.11, points d'arrivée 10.12 et escales 10.10 étant associés à un horaire prédéterminé. Le trajet T comporte dans la [Fig.l], trois portions de trajet T1, T2, T3.

Un mode de réalisation du fonctionnement du système de gestion énergétique 1 est représenté en [Fig.2]. Le démarrage 2 du bateau B entraine l'activation de l'unité de visualisation 12. L'unité de visualisation 12 affiche plusieurs trajets T associés à des horaires prédéterminés, enregistrés dans la mémoire 10.1 de l'unité de contrôle 10 et le navigateur sélectionne 3 le trajet T à effectuer. L'unité de visualisation 12 affiche le trajet T sélectionné et notamment la portion de trajet T à effectuer jusqu'à la prochaine escale 10.10, 10.12. Une fois le trajet T sélectionné par le navigateur, l'unité de contrôle 10 et l'unité de calcul 11 sont activées puis l'unité de calcul détermine l'état de charge 10.2 de la batterie 4. L'unité de calcul 11, à partir du trajet T sélectionné détermine le cap et la vitesse optimaux pour effectuer le trajet T.

Dans le cas où la batterie de l'unité de stockage et d'alimentation d'énergie électrique 11.1 présente un état de charge 10.2 inférieur à 60% de sa charge complète 4.1, l'unité de calcul 11 tient compte des conditions de navigation 14.1, notamment les courants, les marées, les données météorologiques et la température. L'unité de contrôle 10 détermine une valeur relative 5 auxdites conditions de navigation 14.1, dans ce mode de réalisation, sur une échelle de 1 à 5, 1 indiquant des conditions très défavorables et 5 indiquant des conditions très favorables. Si les conditions de navigation 14.1 ont une valeur relative supérieure ou égale à 3 et que l'état de charge 10.2 est supérieur à 40% 5.2, l'unité de calcul 11 préconise l'utilisation des batteries de l'unité de stockage et d'alimentation d'énergie électrique 11.1 jusqu'à ce que l'état de charge 10.2 soit inférieur ou égal à 20% 5.3. Lorsque l'état de charge 10.2 est inférieur ou égal à 20% 5.3, l'unité de calcul 11 préconise l'utilisation de l'unité de production d'énergie embarquée 11.2. Si les conditions de navigation 14.1 ont une valeur relative inférieure à 3 et/ou l'état de charge 10.2 est inférieur ou égal à 40% 5.1, l'unité de calcul 11 préconise l'utilisation de l'unité de production d'énergie embarquée de 11.2. Le bateau B termine le trajet T avec la dernière source d'énergie 11.1, 11.2 préconisée.

Dans le cas où la batterie présente un état de charge 10.2 supérieur ou égal à 60% de sa charge complète 4.2, l'unité de calcul 11 préconise l'utilisation des batteries de l'unité de stockage et d'alimentation d'énergie électrique 11.1. Lorsque l'état de charge 10.2 de la batterie passe en dessous d'une valeur inférieure ou égale à 40%, l'unité de calcul 11 détermine la valeur relative 5 auxdites conditions de navigation. Si les conditions de navigation 14.1 ont une valeur relative inférieure ou égale à 3 5.1, l'unité de calcul 11 préconise l'utilisation de l'unité de production d'énergie embarquée11.2. Si les conditions de navigation 14.1 ont une valeur relative supérieure à 3 5.2, l'unité de calcul 11 préconise l'utilisation des batteries de l'unité de stockage et d'alimentation d'énergie électrique 11.1. Lorsque les conditions de navigations 14.1 ont une valeur relative inférieure ou égale à 3 et/ou l'état de charge 10.2 est inférieur ou égal à 20% 5.4, l'unité de calcul 11 préconise l'utilisation de l'unité de production d'énergie embarquée 11.2.

Le bateau B termine le trajet T avec la dernière source d'énergie 11.1, 11.2 préconisée.

Le navigateur peut choisir de suivre les informations affichées sur l'unité de visualisation 12 correspondant aux paramètres calculés par l'unité de calcul 11. Le navigateur peut ignorer de suivre les informations affichées sur l'unité de visualisation 12 correspondant aux paramètres calculés par l'unité de calcul 11.

Ce mode de réalisation peut s'appliquer au trajet T prédéterminé tel que représenté en [Fig.1]. Le bateau B part du point de départ 10.11. Le navigateur démarre le bateau B ce qui entraine l'activation de l'unité de visualisation 12. L'unité de visualisation 12 affiche sur le terminal du bateau B, une pluralité de trajets T prédéterminés, enregistrés dans la mémoire 10.1 de l'unité de contrôle 10 et le navigateur sélectionne le trajet T représenté en [Fig.1] qu'il souhaite effectuer, jusqu'au point d'arrivée 10.12. Le système de géolocalisation 10.3 du bateau B est actif dès l'allumage du bateau B. Le navigateur ayant choisi son trajet T, l'unité de calcul 11 et l'unité de contrôle 10 sont activées. L'unité de calcul 11, reçoit la position du bateau B au point de départ 10.11 de la part du système de géolocalisation 10.3, et tient compte du trajet T prédéterminé à effectuer. L'unité de calcul 11 détermine l'état de charge 10.2 de la batterie de l'unité de stockage et d'alimentation d'énergie électrique et calcule le cap et la vitesse optimaux pour atteindre la prochaine escale 10.10 à l'horaire prédéterminé associé à ce dit point d'escale 10.10. Dans ce mode de réalisation, le bateau B commence sa journée avec l'état de charge 10.2 de la batterie à 100%, l'unité de calcul 11 préconise l'utilisation des batteries de l'unité de stockage et d'alimentation d'énergie électrique 11.1. Le navigateur peut choisir de suivre ou d'ignorer de suivre les informations affichées sur l'unité de visualisation 12 correspondant aux paramètres calculés par l'unité de calcul 11. Une fois arrivé à la prochaine escale 10.10, le système de géolocalisation 10.3 détermine la position du bateau B au point escale 10.10. L'unité de calcul 11 détermine l'état de charge 10.2 de la batterie et calcule le cap et la vitesse optimaux pour atteindre le point d'arrivée 10.12. L'état de charge 10.2 de la batterie est maintenant inférieur à 40%, l'unité de calcul 11 tient alors compte des conditions de navigation 14.1 et de la valeur relative que l'unité de contrôle 10 leur a associé, dans ce mode de réalisation, la valeur relative est de 4. L'unité de calcul 11 préconise l'utilisation de l'unité de production d'énergie embarquée 11.2. Le bateau B termine le trajet T au point d'arrivée 10.12 avec l'utilisation de l'unité de production d'énergie embarquée 11.2.

La description qui précède explique clairement comment l'invention permet d'atteindre les objectifs qu'elle s'est fixée, à savoir proposer un système d'optimisation du choix de la source d'énergie électrique alimentant le système propulsif du bateau afin de maximiser le mode de propulsion électrique sur batteries tout en proposant une durabilité plus grande des batteries et une diminution de leur dimensionnement, en proposant un système de gestion énergétique d'un bateau fluvial ou maritime comportant un système propulsif, une unité de stockage et d'alimentation d'énergie électrique dudit système propulsif dudit bateau et une unité de production d'énergie embarquée adaptée pour sélectivement recharger ladite unité de stockage et d'alimentation et/ou pour alimenter le système propulsif, ledit système de gestion énergétique, comportant une unité de stockage et d'alimentation d'énergie électrique du système propulsif dudit bateau et une unité de production d'énergie embarquée adaptée pour recharger ladite unité de stockage et d'alimentation et/ou pour alimenter le système propulsif, ledit système de gestion énergétique, comportant une unité de contrôle comportant une mémoire dans laquelle est stocké au moins un trajet prédéterminé destiné à être effectué par le bateau et définissant au moins une escale associée à un horaire ; une unité de calcul agencée pour déterminer, à partir dudit trajet prédéterminé , un cap cible et une vitesse cible pour atteindre ladite escale audit horaire associé, et pour déterminer, au moins à partir dudit cap cible et de ladite vitesse cible, une source d'énergie cible d'un propulseur parmi l'unité de stockage et d'alimentation et l'unité de production d'énergie embarquée.

En tout état de cause, l'invention ne saurait se limiter aux modes de réalisation spécifiquement décrits dans ce document, et s'étend en particulier à tous moyens équivalents et à toute combinaison techniquement opérante de ces moyens.

## Revendications

1. Système de gestion énergétique (1) d'un bateau (B) fluvial ou maritime comportant un système propulsif, une unité de stockage et d'alimentation en énergie électrique (11.1) dudit système propulsif dudit bateau et une unité de production d'énergie embarquée (11.2) adaptée pour sélectivement recharger ladite unité de stockage et d'alimentation et/ou pour alimenter le système propulsif, ledit système de gestion énergétique comportant :
a. une unité de contrôle (10) comportant une mémoire (10.1) dans laquelle est stocké au moins un trajet (T) prédéterminé destiné à être effectué par le bateau (B) et définissant au moins une escale (10.10, 10.12) associée à un horaire ;
b. une unité de calcul (11) agencée pour déterminer, à partir dudit trajet (T) prédéterminé, un cap cible et une vitesse cible pour atteindre ladite escale (10.10, 10.12) au dit horaire associé, et pour déterminer, au moins à partir dudit cap cible et de ladite vitesse cible, une source d'énergie cible (11.1, 11.2) du système propulsif parmi l'unité de stockage et d'alimentation et l'unité de production d'énergie embarquée.

2. Système (1) selon la revendication précédente, dans lequel ledit trajet (T) définit une pluralité d'escales (10.10, 10.12) chacune associée à un horaire, dans lequel l'unité de contrôle (10) comporte un système de géolocalisation (10.3) du bateau (B), et dans lequel l'unité de calcul (11) est agencée pour déterminer, lors de chaque escale (10.10, 10.12) dudit trajet (T), à partir dudit trajet (T) et de la position du bateau (B), estimée au moyen du système de géolocalisation (10.3), un cap cible et une vitesse cible pour atteindre la prochaine escale (10.10, 10.12) audit horaire associé, et pour déterminer, au moins à partir dudit cap cible et de ladite vitesse cible, la source d'énergie (11.1, 11.2) cible.

3. Système (1) selon l'une des revendications précédentes, dans lequel l'unité de contrôle (10) est agencée pour déterminer un état de charge (10.2) de l'unité de stockage et d'alimentation en énergie électrique (11.1) dudit bateau (B), et dans lequel l'unité de calcul (11) est agencée pour déterminer ladite source d'énergie cible (11.1, 11.2) du système propulsif au moins à partir dudit cap cible, de ladite vitesse cible et dudit état de charge (10.2).

4. Système (1) selon la revendication précédente, dans lequel l'unité de contrôle (10) est apte à communiquer avec au moins une base de données (14) distante pour recevoir des données relatives à des conditions de navigation (14.1) sur ledit trajet (T) jusqu'à ladite escale (10.10, 10.12) et dans lequel l'unité de calcul (11) est agencée pour déterminer ladite source d'énergie (11.1, 11.2) cible du système propulsif au moins à partir dudit cap cible, de ladite vitesse cible, dudit état de charge (10.2) et desdites conditions de navigation (14.1).

5. Système (1) selon l'une des revendications 3 ou 4, dans lequel l'unité de contrôle (10) est agencée pour comptabiliser la durée d'utilisation de ladite source d'énergie cible (11.1, 11.2) et dans lequel l'unité de calcul (11) est agencée pour déterminer ladite source d'énergie cible (11.1, 11.2) du système propulsif au moins à partir dudit cap cible, de ladite vitesse cible, dudit état de charge (10.2) et de ladite durée d'utilisation.

6. Système (1) selon l'une des revendications 3 à 5, dans lequel l'unité de contrôle (10) est agencée pour déterminer une température de fonctionnement de ladite batterie et dans lequel l'unité de calcul (11) est agencée pour déterminer ladite source d'énergie cible (11.1, 11.2) du système propulsif au moins à partir dudit cap cible, de ladite vitesse cible, dudit état de charge (10.2) et de ladite température de fonctionnement.

7. Système (1) selon l'une des revendications 3 à 6, dans lequel l'unité de contrôle (10) est agencée pour comptabiliser le nombre de changements de source d'énergie (11.1, 11.2) opérés depuis le début d'une période de fonctionnement donnée dudit bateau (B) et dans lequel l'unité de calcul (11) est agencée pour déterminer ladite source d'énergie du mode de propulsion (11.1, 11.2) cible au moins à partir dudit cap cible, de ladite vitesse cible, dudit état de charge (10.2) et du nombre de changements.

8. Système (1) selon l'une des revendications précédentes, **caractérisé en ce qu'**il comporte une unité de visualisation (12) agencée pour afficher sur un terminal dudit bateau (B), ladite source d'énergie (11.1, 11.2) cible.

9. Système (1) selon l'une des revendications précédentes prise en combinaison avec la revendication 4, dans lequel l'unité de contrôle (10) est agencée pour recevoir ou estimer en temps réel des données, dites temps réel, relatives aux conditions de navigation (14.1) et/ou de fonctionnement du bateau (B) et pour comparer lesdites données temps réel avec des données initiales et prédéterminées associées au trajet (T) prédéterminé stocké dans la mémoire (10.1) de l'unité de contrôle (10), et **caractérisé en ce que**, l'unité de calcul (11) étant une première unité de calcul (11), il comporte une deuxième unité de calcul (13) agencée pour, lorsque l'unité de contrôle (10) détermine que les données temps réel diffèrent des données initiales, prédire une source d'énergie cible (11.1, 11.2) du système propulsif à partir des données temps réel, et **en ce que**, lorsque l'unité de contrôle (10) détermine que les données temps réel diffèrent des données initiales, l'unité de visualisation (12) affiche ladite source d'énergie cible (11.1, 11.2) prédit par la deuxième unité de calcul (13).

10. Système (1) selon la revendication précédente, **caractérisé en ce que** la deuxième unité de calcul (13) est agencée pour mettre en œuvre au moins un algorithme d'apprentissage automatique apte à prédire ladite source d'énergie cible (11.1, 11.2) à partir desdites données temps réel, et dans lequel ledit algorithme a été entrainé au préalable à prédire une source d'énergie cible (11.1, 11.2) à partir des sources d'énergie (11.1, 11.2) déterminées par la première unité de calcul (11) lorsque lesdites données temps réel sont conformes auxdites données initiales.

11. Bateau (B) fluvial ou maritime comportant un système propulsif, une unité de stockage et d'alimentation en énergie électrique (11.1) dudit système propulsif et une unité de production d'énergie embarquée (11.2) adaptée pour recharger ladite unité de stockage et d'alimentation (11.1) et/ou pour alimenter le système propulsif, **caractérisé en ce qu'**il comporte un système de gestion énergétique (1) selon l'une des revendications précédentes.

12. Bateau (B) selon la revendication précédente, **caractérisé en ce que** l'unité de production d'énergie embarquée (11.2) est une unité de production d'énergie électrique.

13. Bateau (B) selon la revendication 11, **caractérisé en ce que** l'unité de production d'énergie embarquée (11.2) est une unité de production d'énergie thermique.
